(19) Europäisches Patentamt / European Patent Office / Office européen des brevets

(11) **EP 3 299 274 A1**

(12) **EUROPEAN PATENT APPLICATION**
published in accordance with Art. 153(4) EPC

(43) Date of publication:
**28.03.2018 Bulletin 2018/13**

(51) Int Cl.:
**B63H 9/06** (2006.01)

(21) Application number: **15892581.8**

(22) Date of filing: **20.05.2015**

(86) International application number:
**PCT/JP2015/064447**

(87) International publication number:
**WO 2016/185582 (24.11.2016 Gazette 2016/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Morimoto, Nobuyoshi
Tokyo 150-0035 (JP)**

(72) Inventor: **Morimoto, Nobuyoshi
Tokyo 150-0035 (JP)**

(74) Representative: **Williams Powell
11 Staple Inn
London WC1V 7QH (GB)**

(54) **HYBRID SHIP USING WIND-POWERED PROPULSIVE FORCE AS AUXILIARY**

(57) To provide a merchant ship capable of preventing a deck from being occupied by sailing facilities even by disposing a bridge at a stern as in the past, preventing an increase of burden in cargo handling by freely disposing a handling port without limitation, preventing a burden on a cargo space due to incidental facilities of sailing facilities under the deck, keeping clear view from a bridge even when a sail increases in size, realizing high fuel-saving by promoting the use of wind power, and preventing air pollution. A hybrid ship which supplementally uses a wind-powered propulsive force in addition to a main engine and a propulsion device driven by the main engine, includes: a tower which includes an accommodation area provided at a stern section and a bridge (11) served as a navigating and maneuvering workstation and provided above the accommodation area, wherein a sail (30), which is retractable to be stored in each side wall of the accommodation area and which is laterally deployable, is disposed in an airspace, which is located lateral to the accommodation area in the tower, below a height position of a floor surface of the bridge (11) and above a deck (6).

Fig. 4

**Description**

Technical Field

The present invention relates to a ship which supplementally uses wind power as a propulsive force of the ship, and more particularly, to a ship which ensures a larger airspace in each ship side area and an accommodation area tower by building a tower for an accommodation area and is provided with a sail for using the wind power and a sail-deploying unit for the purpose of mainly using leading wind from a stern direction. That is, the invention relates to a ship which saves fuel cost and prevents air pollution, which is suitable for a merchant ship, and particularly which is advantageous for a beamy ship.

Background Art

Until ships were propelled by using mechanical forces, the ships had been operated by the wind power for a long time from the beginning of human history. Although ships had been simple and small ones such as sailboats in the past, it became possible that larger and faster ships were sailed as the sails became large, the sailing facility and technology for using multiple sails were improved, and the sails and masts were strengthened. It is said that the last Cutty Sark type sailing ship is a result obtained by the integration of the improved technologies.

Then, due to market demands for regular operation service, high speed, and large size of ships, the technologies were greatly developed by using a method where the steam power of the Industrial Revolution is mechanically applied. Then, the ships become to use diesel internal combustion engines, with which the steam power was replaced because of convenience and high power and efficiency of the diesel internal combustion engine.

Two oil shocks, Lehman shock, and sharp rise in fuel cost in recent years brought about stagnation of the world economy, the shipping industry was caught in a long-term depression at each time, and the deficit operation services were inevitably required. To provide relief from this situation, the operation modes of ships were greatly affected. Changes in main engine operation modes and in specifications thereof were also significant issues. One of the solutions is main engine decelerating/super-decelerating operation for saving the fuel cost. As well as the 30% MCR (MCR: Maximum Continuous Rating (hereinafter, the same applies to the following description) operation (the low load operation at 30% of the maximum output), even the 10% MCR operation state was also normalized.

With the deceleration to this level, the sailing operation using the wind power and the use of sails as an auxiliary propulsion device were also taken into consideration. Likewise, various proposals were made after the first oil shock and several modern sailing ships each adopting the "Engine main, Sail assist" system different from the conventional sailing ships such as Cutty Sark were constructed.

It is said that Shin Aitoku Maru is, "the world's first energy-saving merchant ship, which was constructed in 1980, requiring no extra hands for the sailing" "with natural wind energy in order to save fuel consumption", which had been "researched and developed for attaining practical use by Japan Marine Machinery Development Association with backing of Japan Shipbuilding Industry Foundation" as a quacy-public financial support, and which had been first of all automated in sailing and improved for a hull form, propellers, engines, etc. thereof so as to save as many as about 50% of fuel compared with the same type of conventional ships (see Non Patent Literature 1)".

However, a merchant ship is now in a position economically sensitive to the construction cost. In the case of Shin Aitoku Maru, it was inevitable to have a structure with too expensive development cost which necessities the quacy-public financial support compared with merchant ships using ordinary internal combustion engines. That is, since it is necessary to provide sails on the deck of the amidship and on the deck of the bow section with wind propulsion mechanisms and to embed a sailing mechanism under the deck while requiring a compartment for an internal combustion engine on the stern as illustrated in the Shin Aitoku Maru model diagram of Non Patent Literature 1, there is basically additional cost for purchasing and installing sailing facilities, further the sailing facilities affect the configuration of the entire ship. Accordingly, it seems that the construction cost and the development cost had to be very expensive as a whole. In addition, a problem arises in that the sailing facilities bring about the negative effect described below.

When a plurality of masts of sails are provided on the deck and supporting structures are provided under the deck, not only additional construction cost should be spent but also an opening portion for loading and unloading cargo is restricted by the sailing facilities occupying the deck. Accordingly, the loading and unloading work is disturbed. Thus, a fundamental problem arises in the merchant ship such that additional time and costs are needed for the cargo handling operation.

In addition, a problem arises in that a shipboard space which would be used for cargo placement is occupied by the sailing facilities and a cargo capacity in the ship decreases due to the installation of incidental facilities for the sailing under the deck. If the loading capacity decreases, the fuel cost per load increases. Accordingly, even if the fuel cost per unit of the hull is reduced, it is easily imagined that the fuel cost and the cargo handling cost per load will rise. Thus, this conventional ship cannot be applied to a merchant ship after all even if "about 50% of fuel is saved compared with the same type of conventional ships" and modern sailing ships adopting the "Engine main, Sail assist" system with such a configuration cannot be widely spread.

Recently, as measures against rapidly rising crude oil price, for the low carbonization, and against global warming caused by $CO_2$ emission, a hybrid sailing ship employing the "Sail main, Engine assist" system illustrated in Non-Patent Literature 2 has been also developed in order to further reduce the fossil fuel usage amount. Due to the "Sail main, Engine assist" system, the area of each sail increases and the burden of handling the sails also increases. To cope with them, it can be understood, as disclosed in Patent Literature 1, that the burden of handling each sail can be decreased by providing rigid wings as the sails and masts having elasticity. However, as evaluated as a merchant ship, the previous problem described in paragraph [0008] is quite true as well.

That is, when a plurality of masts of sails are provided on the deck and supporting structures are provided under the deck, not only additional construction cost should be spent but also an opening portion for loading and unloading cargo is restricted by the sailing facilities occupying the deck. Accordingly, the loading and unloading work is disturbed. As a result, a fundamental problem still arises in the merchant ship such that additional time and costs are needed for the cargo handling operation.

In addition, a problem also arises in that a shipboard space which would be used for cargo placement is occupied by the sailing facilities and a cargo capacity in the ship decreases due to the installation of incidental facilities for the sailing under the deck. If the loading capacity decreases, the fuel cost per load increases. Accordingly, even if the fuel cost per unit of the hull is reduced, it is easily imagined that the fuel cost and the cargo handling cost per load will also rise. Thus, even if the fuel consumption amount is reduced by half, this conventional ship cannot be also easily applied to a merchant ship.

Further, for the hybrid sailing ship employing "Sail main, Engine assist" system, for example, three or more huge retractable sails each having a width of 20 m and a height of 50 m in a sailing mode are provided at the front side when viewed from the stern (see Fig. 7 in a full sail mode of Non-Patent Literature 2). Since the field of vision toward the front side from the stern is disturbed, an additional problem arises in that this specification does not match Japanese Industrial Standard JIS F 0420: 2009 (ISO 8468: 2007) "Ships and marine technology-Ship's bridge layout and associated equipment-Requirements and guidelines" illustrated in Non-Patent Literature 3.

That is, it is difficult to provide the bridge at the stern as in the conventional merchant ship when it is intended to meet the standard requirements in 4.2.3.2: the total arc of blind sectors shall not exceed 20° within the required total field of vision of 225° [of 112.5° each from the bow toward either side]. No blind sector at either side shall exceed 10°. No blind sector at either side shall exceed 5° within 10° from the actual bow toward either side. The clear sector between two blind sectors shall not be less than the arc range of a larger blind sector among both the blind sectors". Therefore, in the hybrid ship illustrated in Fig. 7 of Non-Patent Literature 2, the bridge and a part of the accommodation area are provided at a bow section and the rest of the accommodation area is provided at a stern section.

Then, since not only the sailing facilities but also the bridge occupies the deck in addition to a place above the engine, the aforementioned problem will further worsen. The reason why a bridge is placed at a stern section is originally as follows. Since a diesel engine, which is a propulsion mechanism, is located in a stern section, there cannot be a cargo space, namely, cargo cannot be loaded in the stern section. Thus, a bridge is provided in the stern section above the diesel engine in order to prevent the occurrence of a dead space on the deck. When a bridge is installed at a bow section, a new dead space can be formed therebelow. Even if the space can be utilized, the application in a merchant ship is limited and the burden of cargo handling becomes heavy.

Further, in a case where an accommodation area is separated, it is also known that a lifeboat lowering device, which is normally placed only at a stern section, is additionally required to be installed also at a bow section. Accordingly, a design needs to be further changed and a design on the deck is limited (Non-Patent literature 4).

When a bridge is not disposed at a bow section, as disclosed in Fig. 1 of Patent Literature 2, a large number of relatively short sails can be provided on a deck in order to ensure the field of vision toward the front side. However, since the problem of occupying the deck still occurs, the problem of limiting the field of vision during navigation still be remained.

Citation List

Patent Literature

Patent Literature 1: JP 5318008 B2, Registered on July 19, 2013
Patent Literature 2: JP 2012-240539 A
Patent Literature 3: JP H11-129977 A
Patent Literature 4: JP 2007-223351 A

Non-Patent Literature

Non-Patent Literature 1:

http://www.funenokagakukan.or.jp/sc_02/s/genre/shu/data/B82013.html, Museum of Maritime Science, ship model drawing of "Sail assisted tanker" Shin Aitoku Maru (1980)"

Non-Patent Literature 2: "" Wind Challenger Project" Utilizing Ocean Wind Power", Kazuyuki Ouchi, Journal of Japan Institute of Marine Engineering, Vol. 47, No. 4 (2012), P108 - P113.
Non-Patent Literature 3: Japan Industrial Standard JIS F 0420: 2009 (ISO 8468: 2007), "Ships and marine technology-Ship's bridge layout and associated equipment-Requirements and guidelines"
Non-Patent Literature 4:

https://www.classnk.or.jp/hp/pdf/reseach/ri2012_05seminar.pdf, "Outline of Next Generation Large Sailing Vessel "Wind Challenger Project"", "3. Basic Design Concept/3.2.2 Lifeboat" Nippon Kaiji Kyokai (ClassNK)

Summary of Invention

Technical Problem

In this way, regardless of the "Engine main, Sail assist" system or the "Sail main, Engine assist" system, in a conventional hybrid ship using a wind-powered propulsive force, increase of its shipbuilding cost and development cost can be estimated due to the re-examination on the design of the hull of the entire ship. Further, in an application to the merchant ship, the sailing facilities occupy the deck, the cargo handling burden increases due to the limited port for the cargo, and the cargo space is also limited by the incidental facilities for sailing under the deck. When each sail increases in size, the arrangement of the bridge has to be considered again in order to ensure the field of vision and thus, these circumstances will further worsen. Effective transportation cost per unit of cargo increases and fuel cannot be saved so highly as it appears. As a result, since it is difficult to achieve this conventional ship as the merchant ship, there is a hesitation when employing this configuration.
The invention mainly relates to a new hybrid ship attained by studying a method of using a wind-powered propulsive force while disposing the bridge at the stern, so that, without need of re-design on the entire structure of the hull and without further increase of burden on the cargo handling work as is conventionally done, this new hybrid ship does not further decrease the cargo space by the sailing facility, decreases the fuel consumption amount by using the wind-powered propulsive force, prepares a measure for an increase in fluid fuel price of an internal combustion engine for crude oil, and prevents air pollution in response to a reduction of $CO_2$, using supplementally the wind-powered propulsive force.

Solution to Problem

The invention solving this problem is as follows.

[Invention of claim 1]

A hybrid ship which supplementally uses a wind-powered propulsive force in addition to a main engine and a propulsion device driven by the main engine, comprising:

a tower which includes an accommodation area provided at a stern section and a bridge served as a navigating and maneuvering workstation and provided above the accommodation area, wherein a sail, which is retractable to be stored in a side wall of the accommodation area and which is laterally deployable, is disposed in an airspace, which is located lateral to the accommodation area in the tower, below a height position of a floor surface of the bridge and above an upper deck.

[Operation and Effect of Invention]

As for a vessel, in spite of an increase in the size, the number of operation personnel does not increase so much, and an accommodation area does not increase noticeably compared to a small boat. Further, the position of bridge slightly increases in height in order to keep clear front view from the bridge, and the entire structure of the accommodation area is streamlined in consideration of profile drag of the ship due to wind. Accordingly, in such a vessel, a large airspace has been formed on each ship side with respect to the accommodation area. An object of the invention is to create the larger airspace at each ship side by building the tower for the accommodation area including the bridge, and by installing the sail for using wind power and a sail-deploying unit for using leading wind mainly from a stern direction. In this case, the tower is constructed such that the accommodation area extends upward from the upper deck, and a top portion of the tower above the accommodation area is provided with the navigating and maneuvering workstation (hereinafter, also referred to as the bridge). Since the tower is built for the accommodation area, a space, which would have been occupied by a conventional accommodation area and a bridge, becomes the airspace located lateral to the tower for the accommodation area, and the sail, which is retracted to be stored in the tower for the accommodation area, is disposed in this airspace above an upper deck below the height position of the floor of the navigating and maneuvering workstation so that the sail can be laterally deployed from the tower.

In this way, since a construction area on the deck can be decreased by the building the tower for the accommodation area, particularly in a beamy vessel, the airspace is formed lateral to the tower and the sail is deployed laterally below the bridge in the airspace so as not to disturb clear view from the bridge in four directions. Since a structure frame of the tower and a support structure corresponding to a mast of a normal sail can be commonly used or can be supported by each other, there is an effect of decreasing cost for building the ship including a sailing mechanism.

Regarding the arrangement of the tower structure of the accommodation area, the tower is installed on the deck above a propulsion mechanism inside the ship at the stern section as in an arrangement of a bridge of a conventional ship, a dead space on the deck is excluded as a merchant ship, and a degree of freedom of installation of a cargo handling facility and a cargo space inside the ship is ensured.

[Invention of claim 2]

The hybrid ship according to claim 1, further comprising a bridge wing, which is connected to the bridge served as the navigating and maneuvering workstation disposed above the accommodation area of the tower and which is extended to each of both ship sides, wherein the sail is hung down from a yard to be laterally sail deployable to each of both ship side directions in a lower portion of an overhanging portion of the bridge wing, or below the overhanging portion of the bridge wing.

[Operation and Effect of Invention]

When the structure of the conventional accommodation area is streamlined by building the tower for the accommodation area, the navigating and maneuvering workstation provided at the top portion of the tower does not directly reach each ship side. It is preferable, for clear view from each ship side, to provide a wing bridge, which is connected to the navigating and maneuvering workstation of the tower and extended to the ship side. At the same time, the sail is hung down to be deployable below the overhanging portion of the wing extended toward the ship side. As one embodiment, the sail is hung down from the yard which enables to perform lateral sail deploying to each ship side direction below the wing, which ensures clear view from each ship side. As another embodiment, a yard portion supporting the lateral deploying of the sail and the wing are commonly formed as one unit and the yard portion supporting the lateral deploying of the sail and the wing are connected to each other. As a result, there is an effect of reducing a total cost for building the ship including also the sailing mechanism. Further, since a deck space, which would be uselessly occupied by an extra sailing facility, can be avoided, the degree of freedom of installation of the cargo handling facility and the cargo space inside the ship is ensured.

[Invention of claim 3]

The hybrid ship according to claim 1 or 2, wherein the deployable sail is made of a flexible material, retractable to be stored in a storage portion disposed inside the tower, and deployable to each ship side direction.

[Operation and Effect of Invention]

The deployable sail can have various configurations. However, if the sail is made of the flexible material, there is no need to provide an exceptional folding mechanism or a special sliding mechanism for the deploying such as a rigid sailing part, and a trouble for a maintenance at the top portion of the tower is reduced. If the sail is made of the flexible material, the sail can be easily retracted to be stored inside the tower. For example, by deploying the sail in a curtain moving manner and by functioning retracting motion, there is an effect of reducing a total cost for building the ship including also the sailing mechanism. Further, since an upper deck space, which would be uselessly occupied by an extra sail retracting facility or sail folding facility, can be avoided, the degree of freedom of installation of the cargo handling facility and the cargo space inside the ship is ensured.

[Invention of claim 4]

The hybrid ship according to claim 3,
wherein the sail is deployed with a suspension tool suspended by the yard at an upper end of the sail, and with a support supported by a boom at a lower end of the sail, and
as units for deploying the sail,
the yard hanging the flexible sail with the suspension tool and the boom supporting the sail with the support are provided with the suspension tool and the support which are slidably disposed on guide rails provided on the yard and the boom, respectively,
a towing mechanism including a driving mechanism is provided to deploy and retract the suspension tool on the guide rail to and from the ship side direction,
the towing mechanism includes a controller for operating the towing mechanism, and
a lateral sail deploying and retracting power unit is provided for deploying and retracting the flexible sail in a curtain moving manner.

[Operation and Effect of Invention]

The deployable sail can have various configurations. However, when the support and the suspension tool, with which the sail made of the flexible material is deployed, are slid on the guide rails like a curtain, the towing mechanism is provided to be slidable on the guide rail in a reciprocating manner to and from each ship side direction. As one embodiment, a wire towing mechanism and a wire winding mechanism for driving the towing mechanism are provided as a driving mechanism so that the sail is retracted like a curtain. The driving mechanism is provided with a controller for operating the driving mechanism. Since operation for the retraction can be automatically completed by deploying operation from the bridge, there is an effect that the operation can be simplified.

[Invention of claim 5]

The hybrid ship according to any one of claims 1 to 4,
wherein a framework structure of the tower includes
a main center pillar which is set up at a center of the accommodation area and
auxiliary pillars which are set up at four corners forming a quadrilateral around the main center pillar, and
the five pillars are connected at a top site and a bottom site of the tower with main ribs so that at each of the top site and the bottom site, the main ribs form a cross shape on a horizontal plane and the four auxiliary pillars are connected to each other with auxiliary ribs to form the quadrilateral.

[Operation and Effect of Invention]

Since the tall tower is built for the accommodation area and the wind power of the sail is transmitted to a hull through the tower, a structure of the accommodation area has enough strength and rigidity to support a sail mast functional portion, a yard functional portion, and a boom functional portion as follows.
The large main pillar is set up at the center of the accommodation area, the auxiliary pillars are provided at the four corners, these five pillars are connected to each other to form the cross shape with the main ribs, and the auxiliary pillars are connected to each other to form the quadrilateral with the auxiliary ribs. In the structure of the accommodation area, each cross shape of the main ribs is located at a site under the bridge and at a bottom site, further, in one embodiment, it is located at required intermediate sites. As the pillar, a pipe material is used in one embodiment and an H-steel member etc. is used in another embodiment. In this way, as the framework structure of the tower for the accommodation area, the main pillar supports the structure of the accommodation area and supports the yard and the boom which receive the wind power before the wind to transmit a force from the sail at the upper and at the lower end, respectively. The main pillar, the auxiliary pillars, the main ribs, and the auxiliary ribs integrally form the entire structure. Accordingly, there is an effect that the strength and the rigidity are obtained while saving a space on the deck and decreasing the weight.
These pillars do share to be used for conduits, water and steam pipes, sewage discharge pipes, etc. to reduce the cost of new construction work and that of the maintenance.

[Invention of claim 6]

The hybrid ship according to any one of claims 1 to 4,
wherein a framework structure of the tower includes
a main center pillar which is set up at a center of the accommodation area and
auxiliary pillars which are set up at four corners forming a quadrilateral around the main center pillar, and
the five pillars are connected at a top site, a bottom site, and at least one intermediate site of the tower with main ribs so that at each of the top site, the bottom site and the intermediate site, the main ribs form a cross shape on a horizontal plane and the four auxiliary pillars are connected to each other with auxiliary ribs to form the quadrilateral.

[Operation and Effect of Invention]

In addition to the structure set forth in the above-described paragraph, that is in the tower, in addition to the top site and the bottom site, at also at least one intermediate site, when the main ribs form each cross shape on the horizontal plane and the four auxiliary pillars are connected to each other with the auxiliary ribs to form the quadrilateral, the structural tolerance further preferably increases.

[Invention of claim 7]

The hybrid ship according to any one of claims 1 to 6, wherein the sail is set as a main sail, and an additional sail yard and an additional sail boom are further extended, from the yard supporting the main sail from above and the boom supporting the main sail from below in the main sail mechanism, to an outside direction of the ship side so that an additional sail is laterally sail deployable.

[Operation and Effect of Invention]

If the additional sail is deployed when safety can be confirmed during daytime, the leading wind can be further efficiently used within a scope of the additional sail. Accordingly, the energy saving efficiency is further enhanced and the degree of air pollution is further reduced.

[Invention of claim 8]

The hybrid ship according to any one of claims 1 to 7, wherein the tower is built including the accommodation area such that in a structure of the accommodation area, a height from a deck to a floor of the bridge ranges from 50% to 55% of a ship width.

[Operation and Effect of Invention]

Regarding a space which becomes the airspace by building the tower for the accommodation area, the sail function is not sufficiently exhibited when the place is too small with respect to the ship width while the tower increases in height to become unstable when the place is too large with respect to the ship width. In a conventional ship, it can be said in a sense that in leading wind, an accommodation area occupying all over a ship width could receive wind power before wind. In another sense, in opposing wind, such accommodation area should receive drag against wind, resulting in a negative effect. To cope with this problem, in a conventional structure having the same width as an accommodation area structure as in Patent Literature 3 or 4, corners of the structure were chamfered, or the structure was varied in height with stepped levels toward a bow section for reducing aerodynamic drag. However, in the present invention, when the retractable sail is provided in the airspace created by building the tower for the accommodation area, the sail is deployed before the wind to use the wind power as the propulsive force while the sail is retracted against the wind and due to the streamlined structure of the tower, aerodynamic drag of the accommodation area structure becomes less than before. Accordingly, there is an effect that a complex structure may not be employed and the hull may be designed conveniently.

[Invention of claim 9]

The hybrid ship according to any one of claims 1 to 8, wherein the yard and the boom for the main sail are supported to be horizontally swingable by each of the auxiliary pillars near a bow.

[Operation and Effect of Invention]

The movable yard and boom for the main sail are attached to each ship side by using each bow side auxiliary pillar and the direction of the main sail is changed to be orthogonal to the wind direction to receive leading wind from behind and from each ship side so that the ship is controlled straightly in a counter-steering state with a rudder mechanism. In such changing, various types of the wind from behind can be used, including wind in a lateral direction from behind, so that the wind-powered propulsive force can be increased even under light wind, resulting in improved energy saving effect.

[Invention of claim 10]

The hybrid ship according to claim 9, wherein the yard and the boom for the main sail are enabled to turn at a swing angle range of horizontal swinging is 70° to 80° backward from the ship side direction.

[Operation and Effect of Invention]

When the opening angle is 70° to 80° backward, the leading wind can be preferably used before the wind from the rear side of the stern, so that the propulsive force increases and an energy saving effect is improved.

[Invention of claim 11]

The hybrid ship according to any one of claims 1 to 10, wherein the yard for the main sail is disposed below a bridge wing in each of both sides to hang down the main sail at an upper end of the main sail and the boom for the main sail is disposed on the upper deck to support the main sail at a lower end of the main sail.

[Operation and Effect of Invention]

When the yard of the main sail is disposed below the wing of the bridge in each side to hang down the main sail and the boom of the main sail is disposed on the upper deck to support the main sail at the lower end thereof so as to be horizontally swingable, there is an advantage that the airspace can be fully used below the wing of each bridge while using the tower structure for supporting the sail. When referring to "the boom of the main sail is disposed on the upper deck", it is not limited to a situation where the boom contacts directly to the upper deck, but it includes also a situation where the boom is supported by the auxiliary pillar or the side wall of the tower for the accommodation area and is disposed near the upper deck.

Advantageous Effects of Invention

It is possible to provide a hybrid ship which supplementally uses wind power as a propulsive force of the ship to thereby save energy and prevent air pollution. Here, in the hybrid ship, while a sailing facility is provided above a deck, the arrangement of a handling port is not restricted, and a cargo handling burden is the same as the conventional ship. Then, a cargo space is not compressed by incidental facilities of a sailing facility under the deck, a sail is deployed and retracted in a curtain moving manner by a simple mechanism, an aerodynamic drag decreases even against the wind due to the streamlined tower, and a sail mast and a framework structure of an accommodation area are commonly used.

Brief Description of Drawings

Fig. 1A is a schematic side view of the entire hybrid ship adopted in an embodiment of the invention.
Fig. 1B is a schematic top view of the entire hybrid ship adopted in the embodiment of the invention.

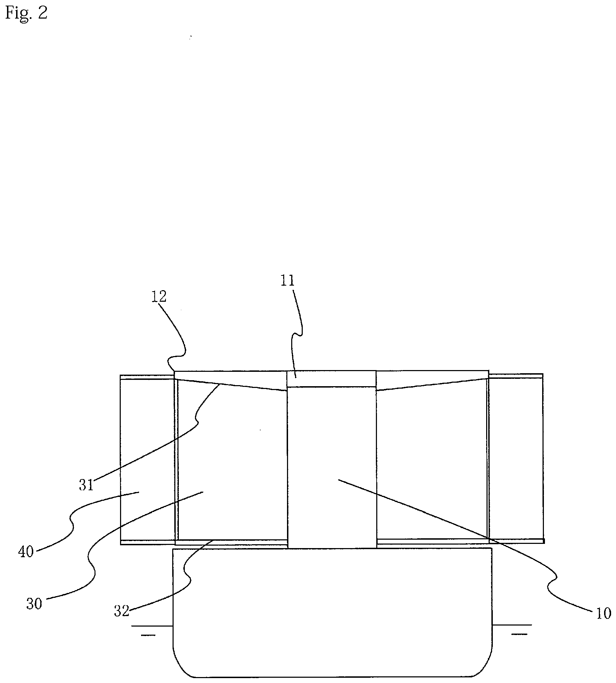

Fig. 2 is a schematic front view of a cross-section A-A of the hybrid ship adopted in the embodiment of the invention.
Fig. 3 is a schematic diagram of a boom support and a boom turning mechanism of the hybrid ship adopted in the embodiment of the invention.
Fig. 4 is a schematic diagram illustrating deploying and retraction of a sail to be used in the hybrid ship adopted in the embodiment of the invention.

Mode for Carrying Out the Invention

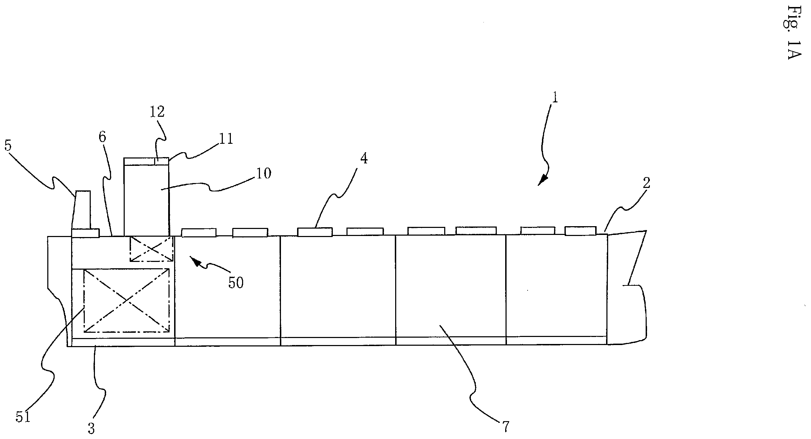

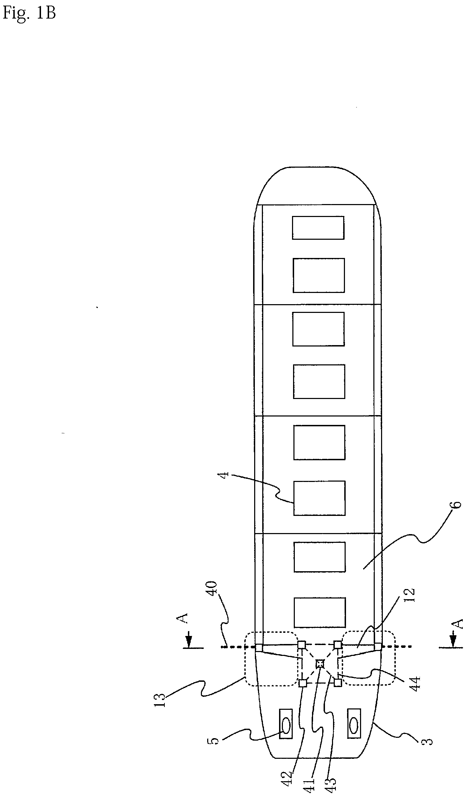

Hereinafter, a hybrid ship which supplementally uses a wind-powered propulsive force according to an embodiment of the invention will be described. Fig. 1A is a schematic side view of the entire hybrid ship adopted in the embodiment of the invention. Fig. 1B is a schematic top view of the entire hybrid ship adopted in the embodiment of the invention.

Even if a ship 1 illustrated in Figs. 1A and 1B is increased in size, the number of operation personnel does not increase so much, and the accommodation area does not increase noticeably compared to a small boat. Further, the position of the bridge 11 increases in height in order to keep clear front view from the bridge 11, and the entire structure of the accommodation area 10 becomes towering in consideration of profile drag of the ship due to wind. Accordingly, in such a vessel, a large airspace has been formed on each ship side of the accommodation area 10, the airspace is, however, not used for energy saving purposes. An object of the invention is to create a larger airspace 13 at each ship side by building a tower for an accommodation area 10 to save energy and to deploy a sail 30 for using the power of the wind in the airspace 13 for using mainly the wind in three directions from stern.

In order to make the accommodation area 10 towering and transmit the wind power of the sail 30 to a hull 1 through this tower, the accommodation area 10 has the following structure using a pipe material, an H-shaped steel and the like as framework structure materials in consideration of the strength and rigidity thereof.

A large main pillar portion 41 is set up at the center of the accommodation area 10, auxiliary pillar portions 42 made of H-shaped steel are provided to surround the main pillar portion 41 in four directions, these five pillars are connected to each other to form a cross shape with main ribs 43, and the auxiliary pillar portions 42 are connected to each other to form the quadrilateral with auxiliary ribs 44 made of H-shaped steel. The main ribs 43 are located at a site under the bridge 11, at a bottom site near an upper deck 6, and at an intermediate site. These pillars 41, 42 and 43 are used for conduits, water pipes, steam pipes, sewage discharge pipes, etc.

Canvas is used for a main sail 30 and an additional sail 40, in deploying these sails, the main sail 30 can be automatically deployed by power, and a boom portion supporting the additional sail 40 can be deployed by a remote control.

Both the main sail 30 and the additional sail 40 are of a laterally deployed type, and a storage compartment (not illustrated) is provided in the accommodation area 10 for the main sail 30 and the additional sail 40 so that these sails can be retracted and ejected with power operation. The main sail 30 is deployed with power operation, and the additional sail 40 is deployed with manual operation. To adjust an opening angle of a boom 32 with respect to the ship side depending on a change of wind direction, a remote operation is performed with a sail turning mechanism 52.

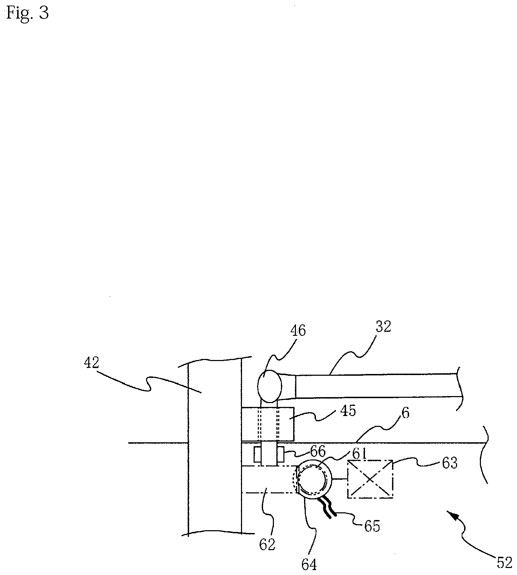

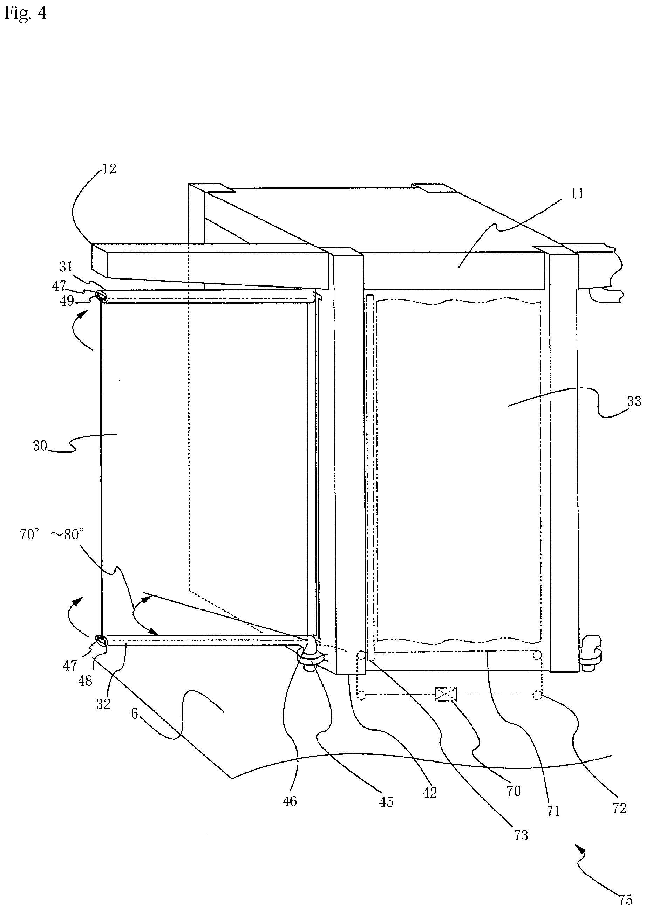

Fig. 3 is a schematic diagram of a support of the boom 32 and the sail turning mechanism 52 adopted in the embodiment of the invention. Fig. 4 is a schematic perspective view illustrating a state where the main sail 30 is deployed from a side wall of the accommodation area 10 and retracted to be stored in the tower for the accommodation area.

The main sail 30 can be laterally deployed with a wire 71 along a movable yard 31, which is located below the bridge 11, and a guide rail 47, which is located on the movable boom 32 provided on the upper deck 6. The main sail 30 is, at an upper portion, supported by a guide rail 47 connected to the movable yard 31 to be hung down through a sail suspension tool 49. The main sail 30 is, at a lower portion, supported by the guide rail 47 connected to the boom 32 through a support 48. The main sail 30 is, when deployed, locked at a specific intermediate position to the ship side direction with a locking mechanism (not illustrated).

In the left side of Fig. 4, the deployed main sail 30 is shown with the solid line and in the right side of Fig. 4, the main sail 30 stored in the tower for the accommodation area is shown with the two-dot chain line. The stored sail 33 will be deployed by a lateral sail deploying and retracting power unit 75.

In an embodiment, the lateral sail deploying and retracting power unit 75 includes a towing mechanism 70, a wire 71, a pulley 72, and a pushing tool 73 (which is served as a towing tool in the case of the operation in the opposite direction). The towing mechanism 70 includes a controller for operating the towing mechanism, and the main sail 30 is automatically deployed to a predetermined deployed position according to a procedure to be described below by operation from the bridge 11.

That is to say, the stored sail 33 is towed by the towing mechanism 70 provided on a guide rail (not illustrated in the drawings, but with the same configuration as that of the guide rail 47) disposed inside a storage portion of the tower for the accommodation area, in terms of the lateral sail deploying and retracting power unit 75, is pushed out to eject from the inside of the storage portion of the tower for the accommodation area by the pushing tool 73 through the pulley 72 and the wire 71, is deployed in the lateral direction to the predetermined position, is moved onto the guide rail 47 of the boom 32 or the yard 31, and is locked at the predetermined position.

In addition, the right main sail of the drawing is also deployed and symmetrical with respect to the center of the tower for the accommodation area, but is not illustrated in Fig. 4.

Furthermore, when the yard 31 and the boom 32 for the main sail 30 are extended in multiple stages in the lateral direction from the fore ends thereof, the additional sail 40 is pushed out to deploy on the extended portion.

It is more preferable that the boom 32 and the yard 31 of the sail be horizontally swingable so that the main sail 30 and the additional sail 40 efficiently use the leading wind. It is preferable that the movable range is 30 to 40° in the front direction and the rear direction of the boom and that the boom 32 and the yard 31 are turned by 70° to 80° backward after being laterally deployed as indicated by an arrow in Fig. 4.

The main sail 30 and the additional sail 40 are formed such that the base portions of the boom 32 and the yard 31 are formed in a goose neck type. As shown in Fig. 4, a goose neck base portion 45 for the boom 32 is connected to and supported by the auxiliary pillar 42 as one unit and a goose neck46 is supported to be swingable about the vertical axis of the goose neck base portion 45. A lower portion of the goose neck 46 is connected to a worm member 62 and a worm wheel 61 for example, so as to turn the goose neck 46 with the sail turning mechanism 52 for making the boom 32 to swing. The worm wheel 61 is connected to a power mechanism 64 of a hydraulic motor. By means of a hydraulic unit (not illustrated), hydraulic oil from a hydraulic hose 65 is used for the rotation of the power mechanism 64 under the control of a driving mechanism controller 63. The rotation of the worm wheel 61 is transmitted to the worm member 62 so as to turn the goose neck 46 slowly about the goose neck base portion 45, and the rotation is locked at a predetermined position by a brake mechanism 66. The goose neck base portion 45 is connected to the auxiliary pillar 42 as one unit in the structure inside the tower for the accommodation area.

Although not illustrated in detail, as for the yard 31 also, a similar goose neck is supported to be rotatable by a goose neck base portion and turned about the goose neck base portion in synchronization with the rotation of the boom.

The size of the sail is, for example, as follows.

The energy of the wind is generally expressed by the following equation.

$$E = 1/2\rho AV^3 \qquad \qquad \text{... (1)}$$

wherein

E: Wind energy (watt)
A: Area of sail (square meter)
V: Wind speed (meter per second).
at altitude of 0 m, temperature of 15°C, (atmospheric pressure of 1.013 hPa in atmospheric standard state),
since air density $\rho$ is 1.225 (kg/cubic meter),
Equation (1) is as follows.

$$E = 0.61AV^3 \qquad \qquad \text{... (2)}$$

As illustrated in Equation (1), a ship propulsive force obtained from the wind is proportional to the cube of the wind speed and is proportional to the pressure receiving area of the wind. A large wind speed will result in a very large propulsive force, which means, however, deterioration of the maritime condition. The upper limit that can be used as a merchant ship is 7 in the Beaufort scale (hereinafter, BF scale), an average wind speed is approximately 15 to 17 m/s, and is 6 in the scale (a wave height of 3 m) or less in the maritime condition scale up to a strong wind.

In this range, the height of the tower bridge is about 50% to 55% of the ship width, and a propulsive force of about 20% to 30% of the main engine of an ordinary ship is obtained. The propulsive force corresponds to the propeller output of the ordinary ship and can be converted to about 15 to 35% of the output of the main engine in mechanical propeller propulsion. An operation equivalent to decelerating operation by the main engine can be expected. As a result, a hybrid ship that supplementally uses the wind-powered propulsive force to save energy and prevent air pollution is provided.

In an embodiment, the specification is as follows.

1 Propulsive force of about 20% to 30% is targeted with following ship speed only using main engine

Full speed in voyage 16.0 knot (7.79 m/s)
Full speed in harbor 12.0 knot (5.84 m/s)
Half speed in harbor 10.0 knot (4.87 m/s)
Slow speed in harbor 8.0 knot (3.89 m/s)
Very slow speed in harbor 5.0 knot (2.43 m/s)

2 Approximate target ship

2-1. DW 310,000 type tanker

| | |
|---|---|
| Loa | 328.0 m |
| B | 57.0 (width) |
| D | 26.5 Molded Depth |
| df | 18.0 Draft |

Main MCR23,600 Kw

3 Outer dimension of accommodation area

Width 17.0 m
Inner depth 17.0
Height 30.0 (height from upper deck to floor of bridge, 53% of width)

4 Dimension of sail

Below bridge 1.5 m (gap between main sail yard and floor surface of overhang bridge)
Above upper deck 2.0 m (gap between main sail boom and upper deck)
Lateral effective breadth 15.5 m
Area of sail 410.8 m$^2$ one surface of main sail additional sail 616 m$^2$

5 Wind power use environment

| | | |
|---|---|---|
| Maritime condition | BF4-5 | wave height 1 to 2 m |
| Wind speed | BF5-7 | wind speed 8 to 17.2 m/s |

6 Wind direction of wind power
Use of leading wind from stern direction up to 170° on portside and on starboard side
(Wind from bow direction is not used)
8 Propulsive force using wind power at wind power of 17.2 m/s 2295 Kw (Equation (1) is multiplied by 0.92 of Profile coefficient)

Then, the propelling energy of 2295 Kw of the wind power of the main sail corresponds to the engine of 3825 Kw (the propeller efficiency is 60%), which corresponds to 16.2% MCR (23600 Kw).

In the main sail + the additional sail (with an increase of 50%), 3442 Kw is generated by the wind power and corresponds to 5737 Kw of the engine, which is 24.3% MCR (23600 Kw).

According to the above-described specification,

Half speed in harbor of 16.2% MCR (23600 Kw) only by main sail,
Sail at maximum speed of 8 knot
In the case of the additional sail, 24.3% MCR (23600 Kw) Sail at 10 knots.

Although the embodiment according to the invention has been described above, the invention is not limited to this embodiment, and various modifications can be made without departing from the spirit of the invention. While the invention has been described in detail in terms of the embodiment described herein, it is not intended that the applicant restricts and limits the scope of the appended claims by the description of the embodiment. Additional advantages and modifications will be understood by those skilled in the art and the elements described in an embodiment may be employed in other embodiments. For example, an additional sail can be a triangular sail of a vertical sail with only a lower boom. In this case, additional deploying can also be done by manually deploying the boom of the additional sail at the bottom. With a simpler mechanism, incidental facilities for additional sails can be realized. Further, it goes without saying that the main sail may be a rigid sail if the sail can be retracted to be stored in the tower for the accommodation area. In one embodiment, a tanker is exemplified. However, when the sail is for a cargo ship or an LNG ship, for a cargo handling facility and a tank facility on the upper deck, the sail does not cause any interference and hence the effect is further improved. Further, the additional sail may be manually deployed after extending the boom and the yard. In order to do this, it is enough to prepare the same incidental facilities as those for deploying sails in a conventional sailing ship and it is preferable that a simpler mechanism is used therefor. This can be applied to a case where the additional sail is the triangular sail of the vertical sail, which may be simpler and more convenient in some cases. Thus, the invention is not limited to any particular detail in a broad viewpoint. Here, each device and embodiment may be illustrated, and a part thereof is described. Therefore, it may depart from the matter described in these details without departing from the spirit and scope of applicant's general inventive concept.

Industrial Applicability

The invention is applicable to a ship propelled by using wind power of a waterborne vessel.

Reference Signs List

| | |
|---|---|
| 1: | ship |
| 2: | bow section |
| 3: | stern section |
| 4: | handling port |
| 5: | funnel |
| 6: | upper deck |
| 7: | cargo space |
| 10: | the tower for the accommodation area |
| 11: | bridge |
| 12: | bridge wing |
| 13: | airspace created by building a tower for an accommodation area |
| 30: | main sail |
| 31: | yard |
| 32: | boom |
| 33: | sail retracted to be stored |
| 40: | additional sail |
| 41: | main pillar portion |
| 42: | auxiliary pillar portion |
| 43: | main rib |
| 44: | auxiliary rib |
| 45: | goose neck base portion |
| 46: | goose neck |
| 47: | guide rail |
| 48: | sail support |
| 49: | sail suspension tool |
| 50: | sail driving mechanism |
| 51: | main engine propulsion device |
| 52: | sail turning mechanism |
| 61: | worm wheel |
| 62: | worm member |
| 63: | driving mechanism controller |
| 64: | hydraulic motor power unit |
| 65: | hydraulic hose |
| 70: | towing mechanism |
| 71: | wire |
| 72: | pulley |
| 73: | pushing tool |
| 75: | horizontal sail deployment/storage power unit |

**Claims**

1. A hybrid ship which supplementally uses a wind-powered propulsive force in addition to a main engine and a propulsion device driven by the main engine, comprising:

a tower which includes an accommodation area provided at a stern section and a bridge served as a navigating and maneuvering workstation and provided above the accommodation area, wherein a sail, which is retractable to be stored in a side wall of the accommodation area and which is laterally deployable, is disposed in an airspace, which is located lateral to the accommodation area in the tower, below a window of the bridge and above an upper deck.

2. The hybrid ship according to claim 1, further comprising a bridge wing, which is connected to the bridge served as the navigating and maneuvering workstation disposed above the accommodation area of the tower and which is extended to each of both ship sides, wherein the sail is hung down from a yard to be laterally sail deployable to each of both ship side directions in a lower portion of an overhanging portion of the bridge wing, or below the overhanging portion of the bridge wing.

3. The hybrid ship according to claim 1 or 2, wherein the deployable sail is made of a flexible material, retractable to be stored in a storage portion disposed inside the tower, and deployable to each ship side direction.

4. The hybrid ship according to claim 3,
   wherein the sail is deployed with a suspension tool suspended by the yard at an upper end of the sail, and with a support supported by a boom at a lower end of the sail, and
   as units for deploying the sail,
   the yard hanging the flexible sail with the suspension tool and the boom supporting the sail with the support are provided with the suspension tool and the support which are slidably disposed on guide rails provided on the yard and the boom, respectively,
   a towing mechanism including a driving mechanism is provided to deploy and retract the suspension tool on the guide rail to and from the ship side direction,
   the towing mechanism includes a controller for operating the towing mechanism, and
   a lateral sail deploying and retracting power unit is provided for deploying and retracting the flexible sail in a curtain moving manner.

5. The hybrid ship according to any one of claims 1 to 4,
   wherein a framework structure of the tower includes
   a main center pillar which is set up at a center of the accommodation area and
   auxiliary pillars which are set up at four corners forming a quadrilateral around the main center pillar, and
   the five pillars are connected at a top site and a bottom site of the tower with main ribs so that at each of the top site and the bottom site, the main ribs form a cross shape on a horizontal plane and the four auxiliary pillars are connected to each other with auxiliary ribs to form the quadrilateral.

6. The hybrid ship according to any one of claims 1 to 4,
   wherein a framework structure of the tower includes a main center pillar which is set up at a center of the accommodation area and
   auxiliary pillars which are set up at four corners forming a quadrilateral around the main center pillar, and
   the five pillars are connected at a top site, a bottom site, and at least one intermediate site of the tower with main ribs so that at each of the top site, the bottom site and the intermediate site, the main ribs form a cross shape on a horizontal plane and the four auxiliary pillars are connected to each other with auxiliary ribs to form the quadrilateral.

7. The hybrid ship according to any one of claims 1 to 6, wherein the sail is set as a main sail, and an additional sail yard and an additional sail boom are further extended, from the yard supporting the main sail from above and the boom supporting the main sail from below in the main sail mechanism, to an outside direction of the ship side so that an additional sail is laterally sail deployable.

8. The hybrid ship according to any one of claims 1 to 7, wherein the tower is built including the accommodation area such that in a structure of the accommodation area, a height from a deck to a floor of the bridge ranges from 50% to 55% of a ship width.

9. The hybrid ship according to any one of claims 1 to 8, wherein the yard and the boom for the main sail are supported to be horizontally swingable by each of the auxiliary pillars near a bow.

10. The hybrid ship according to claim 9, wherein the yard and the boom for the main sail are enabled to turn at a swing angle range of horizontal swinging is 70° to 80° backward from the ship side direction.

11. The hybrid ship according to any one of claims 1 to 10, wherein the yard for the main sail is disposed below a bridge wing in each of both sides to hang down the main sail at an upper end of the main sail and the boom for the main sail is disposed on the upper deck to support the main sail at a lower end of the main sail.

Fig. 1A

Fig. 1B

Fig. 2

Fig. 3

Fig. 4

## INTERNATIONAL SEARCH REPORT

| | International application No. |
|---|---|
| | PCT/JP2015/064447 |

### A. CLASSIFICATION OF SUBJECT MATTER
B63H9/06(2006.01)i

According to International Patent Classification (IPC) or to both national classification and IPC

### B. FIELDS SEARCHED

Minimum documentation searched (classification system followed by classification symbols)
B63H9/06

Documentation searched other than minimum documentation to the extent that such documents are included in the fields searched

| | | |
|---|---|---|
| Jitsuyo Shinan Koho | 1922-1996 | Jitsuyo Shinan Toroku Koho 1996-2015 |
| Kokai Jitsuyo Shinan Koho | 1971-2015 | Toroku Jitsuyo Shinan Koho 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | Microfilm of the specification and drawings annexed to the request of Japanese Utility Model Application No. 112422/1982(Laid-open No. 16299/1984)<br>(Mitsubishi Heavy Industries, Ltd.),<br>31 January 1984 (31.01.1984),<br>claims; page 4, line 20 to page 9, line 17;<br>fig. 4 to 6<br>(Family: none) | 1-4,7,8,11<br>9,10<br>5,6 |
| Y | JP 63-4720 Y2 (Hitachi Zosen Corp.),<br>06 February 1988 (06.02.1988),<br>entire text<br>(Family: none) | 9,10 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 26 June 2015 (26.06.15) | 14 July 2015 (14.07.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

# EP 3 299 274 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5318008 B
- JP 2012240539 A
- JP H11129977 A
- JP 2007223351 A

### Non-patent literature cited in the description

- **SHIN AITOKU MARU.** Sail assisted tanker. *Museum of Maritime Science,* 1980, http://www.funenoka-gakukan.or.jp/sc_02/s/genre/shu/data/B82013.html
- **KAZUYUKI OUCHI.** Wind Challenger Project'' Utilizing Ocean Wind Power. *Journal of Japan Institute of Marine Engineering,* 2012, vol. 47 (4), 108, , 113
- **NIPPON KAIJI KYOKAI.** Outline of Next Generation Large Sailing Vessel ''Wind Challenger Project. *Basic Design Concept/3.2.2 Lifeboat,* vol. 3, https://www.classnk.or.jp/hp/pdf/reseach/ri2012_05seminar.pdf